# EUROPEAN PATENT APPLICATION

(11) **EP 4 539 305 A1**
(43) Date of publication of application: **16.04.2025**
(21) Application number: 23819269.4
(22) Date of filing: 09.06.2023
(51) Int. Cl.: H02K 5/10, F04D 29/42, H02K 5/18, F04D 25/08

(54) **FULLY-SEALED BRUSHLESS MOTOR FOR DRY AND WET APPLICATIONS, PROTECTIVE STRUCTURE FOR MOTOR, AND INSTALLATION METHOD**

(30) Priority: 10.06.2022 CN 202221446991 U; 29.12.2022 CN 202211703925
(71) Applicant: KingClean Electric Co., Ltd., Suzhou New District Suzhou Jiangsu 215163 (CN); Kingclean Electric Green Technology (Suzhou) Co., Ltd., Suzhou, Jiangsu 215000 (CN); Suzhou Kingclean Precision Machinery Co., Ltd., Suzhou, Jiangsu 215101 (CN); Jiangsu Kingclean Intelligent Appliance Co., Ltd., Suzhou, Jiangsu 215129 (CN)
(72) Inventor: NI, Zugen, Suzhou, Jiangsu 215163 (CN); JIA, Hongyun, Suzhou, Jiangsu 215163 (CN)
(74) Representative: Wang, Bo
(86) International application number: PCT/CN2023/099489
(87) International publication number: WO 2023/237106

(57) **Abstract**

Embodiments of the present invention provide a fully-sealed brushless motor for dry and wet applications, a protective structure for a motor, and an installation method. The motor includes a motor casing body, a motor rotor, a stator core, a moving impeller, an air guide enclosure, a circuit board, and a circuit board end cover; the motor casing body includes an upper aluminum casing body and a lower aluminum casing body connected together in a sealed manner; the motor rotor is arranged in a space enclosed by the upper aluminum casing body and the lower aluminum casing body, and the motor rotor transmits heat to the upper aluminum casing body and/or the lower aluminum casing body by means of the stator core to undergo heat dissipation; a rotating shaft of the motor rotor sealingly fits with a bearing and extends out from the lower aluminum casing body, the moving impeller is installed at the shaft head of the rotating shaft; the air guide enclosure is installed on the lower aluminum casing body at an outer side of the moving impeller; a gas flow discharged by the moving impeller is blown towards the motor casing body by means of the air guide enclosure, and the heat of the motor casing body is simultaneously taken away; the circuit board is arranged in a space enclosed by the sealingly connected circuit board end cover and upper aluminum casing body, and a lead of the circuit board passes, in a sealed manner, through a lead outlet hole formed in the circuit board end cover and extends outward.

## Description

### Priority Declaration

This specification claims the priority of Chinese patent application 202221446991.2 filed on June 10, 2022 and Chinese patent application No. 202211703925.3 filed on December 29, 2022. The contents are incorporated herein by reference in their entirety.

### TECHNICAL FIELD

The present specification relates to the field of motors, and more particularly, to a fully-sealed brushless motor for dry and wet applications, a protective structure for a motor, and an installation method.

### BACKGROUND

With the improvement of people's living standards, more and more families begin to reduce labor and improve the quality of life by means of cleaning equipment, such as floor washers and vacuum cleaners. Cleaning equipment typically cleans moisture or other impurities while a motor moves air to dry and clean the floor. If the sealing effect of the housing structure of the motor is poor, it may cause part of moisture or impurities to enter the interior of the motor when the cleaning equipment operates, thereby burning out the internal wiring circuit of the motor and shortening the service life of the cleaning equipment.

Therefore, it is hoped to propose a fully-sealed brushless motor for dry and wet applications, a protective structure for a motor, and an installation method to improve the sealing of the motor and ensure the service life of cleaning equipment equipped with the motor.

### SUMMARY

One of the embodiments of the present description provides a fully-sealed brushless motor for dry and wet applications including a motor casing body, a motor rotor, a stator core, a moving impeller, an air guide enclosure, a circuit board, and a circuit board end cover; the motor casing body comprises an upper aluminum casing body and a lower aluminum casing body connected together in a sealed manner; the motor rotor is arranged in a space enclosed by the upper aluminum casing body and the lower aluminum casing body, and the motor rotor transmits heat to the upper aluminum casing body and/or the lower aluminum casing body by means of the stator core to undergo heat dissipation; a rotating shaft of the motor rotor sealingly fits with a bearing and extends out from the lower aluminum casing body, the moving impeller is installed at the shaft head of the rotating shaft; the air guide enclosure is installed on the lower aluminum casing body at an outer side of the moving impeller; a gas flow discharged by the moving impeller is blown towards the motor casing body by means of the air guide enclosure, and the heat of the motor casing body is simultaneously taken away; the circuit board is arranged in a space enclosed by the sealingly connected circuit board end cover and upper aluminum casing body; an outer surface of a power device Metal-Oxide-Semiconductor Field-Effect Transistor (MOS Transistor) on the circuit board conducts heat through heat conductive glue to be in contact with an upper surface of the upper aluminum casing; a lead of the circuit board passes, in a sealed manner, through a lead outlet hole formed in the circuit board end cover and extends outward; the moving impeller rotates and carries away the heat conducted from the motor rotor, stator core, and circuit board to the outer surfaces of the upper aluminum casing body and lower aluminum casing body.

One of the embodiments of the present specification provides a protective structure for an motor, the motor comprising a motor body and a motor casing body, the motor body comprising a rotating shaft, one end of the rotating shaft extending out of the motor housing from an end wall of the motor housing, the rotating shaft sealingly fitting with the end wall via the protective structure, wherein the protective structure comprises a seal and a bushing; the seal is installed on an outer side surface of the end wall, and an elastic structure surrounding the rotating shaft is provided on the seal; and the bushing is sleeved on the rotating shaft; the bushing is provided with an annular protrusion coaxially arranged with the rotating shaft; and the annular protrusion is embedded in the elastic structure.

One of the embodiments of the present specification provides an installation method of a motor comprising a motor body, a motor casing body, and a protective structure, the motor body comprising a rotating shaft, the protective structure comprising a seal and a bushing, the installation method comprising: extending one end of the rotating shaft from an end wall of the motor casing body; providing the seal on the outer side of the end wall, the seal being provided with an elastic structure surrounding the rotating shaft; and installing the bushing provided with an annular protrusion to the rotating shaft, the annular protrusion being coaxial with the rotating shaft, such that an axial top end of the annular protrusion compresses the elastic structure to be embedded in the elastic structure.

### BRIEF DESCRIPTION OF DRAWINGS

The present specification will further describe by way of exemplary embodiments, which will be described in detail with reference to the accompanying drawings. These embodiments are not limiting, and in these embodiments, like numbers refer to like structures, wherein:
FIG. 1 is a schematic sectional view of a motor according to some embodiments of the specification;
FIG. 2 is a schematic diagram of a motor according to some embodiments of the specification;
FIG. 3 is a schematic diagram of a circuit board according to some embodiments of the specification;
FIG. 4 is another schematic diagram of a motor according to some embodiments of the specification;
FIG. 5 is an enlarged view of part A of the motor shown in FIG. 1;
FIG. 6 is another schematic sectional view of a motor according to some embodiments of the specification;
FIG. 7 is another schematic sectional view of a motor according to some embodiments of the specification;
FIG. 8 is a schematic diagram of a seal and bushing according to some embodiments of the present disclosure;
FIG. 9 is another schematic sectional view of a motor according to some embodiments of the specification;
FIG. 10 is an enlarged view of part C of the motor shown in FIG. 9;
FIG. 11 is another schematic sectional view of a motor according to some embodiments of the specification;
FIG. 12 is an enlarged view of part D of the motor shown in FIG. 11;
FIG. 13 is a schematic sectional view of a portion of the structure for a motor according to some embodiments of the specification;
FIG. 14 is an enlarged view of part E of the motor shown in FIG. 13;
FIG. 15 is a schematic diagram of a cleaning equipment according to some embodiments of the specification; and
FIG. 16 is a schematic flowchart of an installation method for a motor according to some embodiments of the specification.

Description of Reference Numerals: 100, motor; 110, motor body; 111, motor rotor; 111-1, rotating shaft; 111-2, bearing; 112, stator core; 113, cooling fan; 120, motor casing body; 121, upper aluminum casing body; 121-1, groove; 122, lower aluminum casing body; 122-1, end wall; 122-2, through hole; 122-3, clearance; 122-4, installing groove; 122-5, baffle ring; 123, cooling blades; 130, moving impeller; 131, installing plate; 140, air guide enclosure; 141, inlet; 142, outlet; 143, water inlet clearance; 144, accommodating cavity; 150, circuit board; 151, MOS transistor; 152, MCU; 153, lead; 160, circuit board end cover; 161, lead outlet hole; 170, fixed impeller; 180, cooling air duct; 190, protective structure; 191, seal; 191-1, elastic structure; 191-2, annular groove; 192, bushing; 192-1, annular protrusion; 192-2, inner barrel portion; 192-3, installing hole; 192-4, annular base; 200, cleaning equipment; 210, floor brush; 220, dust cup; 230, main body; 240, structural part.

### DETAILED DESCRIPTION

In order to provide a clearer explanation of the technical solution of the embodiments described in the specification, a brief introduction will be given to the accompanying drawings required for the specification of the embodiments. It is obvious that the drawings described below are only some examples or embodiments of the specification. For ordinary technical personnel in this field, the specification can be applied to other similar situations based on these drawings without creative labor. Unless otherwise apparent from the context of the language, or stated otherwise, like reference numbers in the figures refer to like structures or operations.

It should be understood that a "system", "device", "unit", and/or "module", as used herein, is one method for distinguishing between different levels of different components, elements, components, portions, or assemblies. However, other words may be substituted by other expressions if they achieve the same purpose.

As used in this specification and the appended claims, the terms "a", "an", "the" and/or "the" are not intended to be exhaustive or to limit the invention to the precise form disclosed, and may include plural references unless the context clearly dictates otherwise. In general, the terms "comprise" and "include" are intended to cover only those steps and elements that are explicitly recited, but that do not constitute an exclusive list, and that a method or apparatus may include other steps or elements.

Flowcharts are used in the specification to illustrate operations performed by a system according to embodiments of the present specification. It should be understood that the preceding or following operations are not necessarily performed in the order in which they are performed. Instead, the various steps may be processed in reverse order or simultaneously. Also, other operations may be added to or removed from the processes.

When the cleaning equipment operates, if the sealing effect of the motor casing body is poor, it may cause a part of moisture or impurities to enter the interior of the motor when the cleaning equipment operates, thereby burning out the internal wiring circuit of the motor and shortening the service life of the cleaning equipment. The specification provides a motor with better sealing performance, which can effectively prevent liquid or other impurities from entering the motor through the arrangement of protective structure, so as to ensure the service life of cleaning equipment.

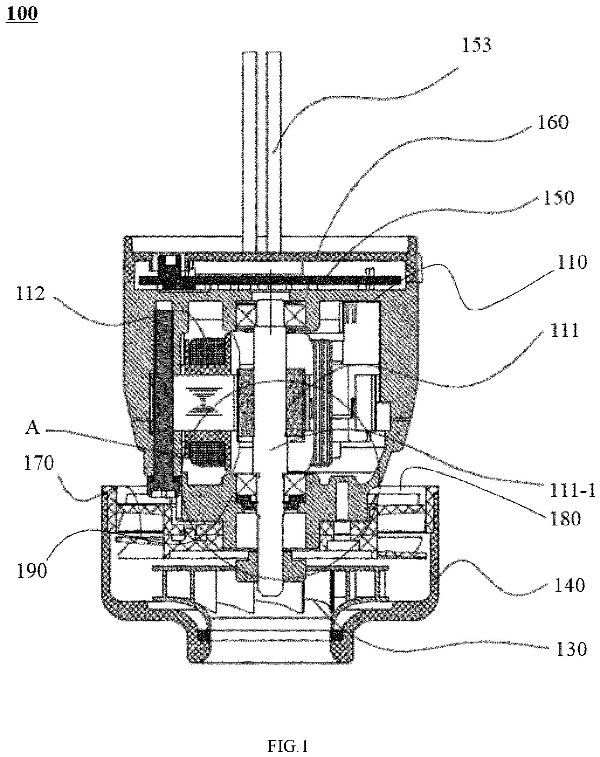

FIG. 1 is a schematic sectional view of a motor according to some embodiments of the specification. As shown in FIG. 1, the motor 100 may include a motor casing body 120, a motor body 110, a moving impeller 130, an air guide enclosure 140, a circuit board 150, and a circuit board end cover 160.

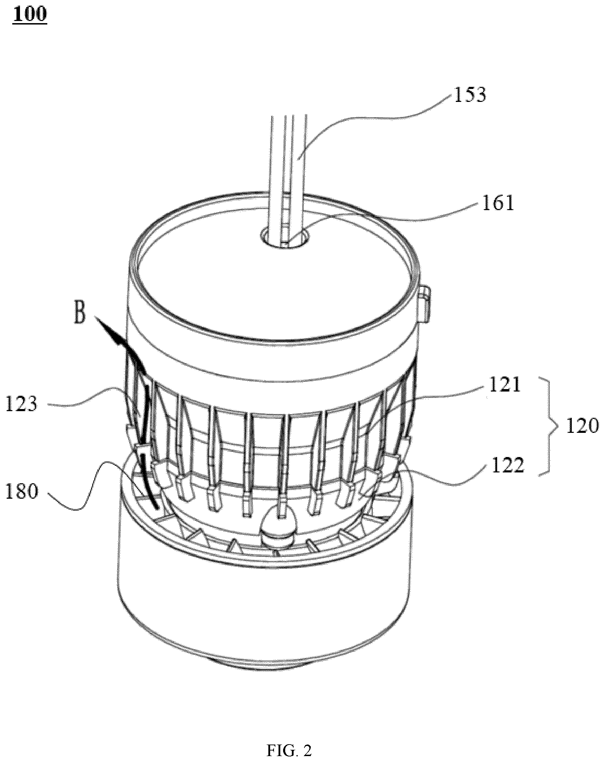

The motor casing body 120 may be configured to house the motor body 110 to prevent damage. In some embodiments, the motor casing body 120 may include an upper aluminum casing body 121 and a lower aluminum casing body 122 connected together in a sealed manner. In the embodiment shown in FIG. 2, the lower aluminum casing body 122 is located below the upper aluminum casing body 121. In some embodiments, the motor casing body 120 may also be integrally formed.

The motor casing body 120 may also be configured to dissipate heat. Here, heat on the motor casing body 120 is generated by the heat generating components of the motor 100. For example, the heat on the motor casing body 120 may be heat generated by the structure of the motor rotor 111, the stator core 112, and the circuit board 150 in the motor 100 and conducted to the outer surfaces of the upper aluminum casing body 121 and lower aluminum casing body 122. In some embodiments, the upper aluminum casing body 121 and/or the lower aluminum casing body 122 may be made of a metal aluminum alloy, so that heat dissipation of the upper aluminum casing body 121 and/or the lower aluminum casing body 122 may be improved, facilitating the manufacturing production of the upper aluminum casing body 121 and/or the lower aluminum casing body 122, further improving toughness of the motor casing body 120, and avoiding deformation. For example, the material of the upper aluminum casing body 121 and/or the lower aluminum casing body 122 may be made of a metal aluminum-magnesium alloy. In some embodiments, the motor casing body 120 may also be made of other materials. For example, the motor casing body 120 may be made of copper with a good heat dissipation property.

In some embodiments, an outer surface of the upper aluminum casing body 121 and/or the lower aluminum casing body 122 may be provided with cooling blades 123. Heat from the upper aluminum casing body 121 and/or the lower aluminum casing body 122 may be transferred to the cooling blades 123 to dissipate heat to increase the cooling rate of the motor 100.

The cooling blades 123 may be provided at any position of the outer surface of the motor casing body 120 in various manners. As shown in FIG. 2, the cooling blades 123 may be circumferentially spaced on the outer surface of the lower aluminum casing body 122. In some embodiments, the cooling blades 123 can be positioned above the cooling air duct 180. When the gas flow B flows, it can pass through the cooling blades 123, thereby taking away the heat on the cooling blades 123 and further improving the heat dissipation effect of the motor 100. Similar to the motor casing body 120, the cooling blades 123 may also be made of a metal aluminum alloy. Further details regarding cooling air duct 180 and gas flow B can be found below in the specification.

In some embodiments, the diameter of the lower aluminum casing body 122 may gradually increase along its end wall toward the upper aluminum casing body 121 so that the gas flow B may contact a larger area of the motor casing body 120 and carry away heat from its surface, enhancing the heat dissipation effect of the motor 100.

The motor body 110 may be configured to generate a driving torque as a power source of the motor 100. The motor body 110 may include a motor rotor 111 and a stator core 112.

As shown in FIG. 1, the motor rotor 111 may be disposed in a space enclosed by the upper aluminum casing body 121 and the lower aluminum casing body 122. When the motor 100 operates, the motor rotor 111 rotates at a high speed, and the motor rotor 111 generates heat. The motor rotor 111 transfers heat to the upper aluminum casing body 121 and/or the lower aluminum casing body 122 through the stator core 112 to dissipate heat. In some embodiments, the stator core 112 may be attached to the inner surface of the upper aluminum casing body 121 and/or the lower aluminum casing body 122 by a heat conductive glue or other type of heat conductive medium so that the heat generated thereby may be transferred to the motor casing body 120 by the heat conductive medium to enhance the heat dissipation effect of the motor 100. The aforementioned heat conductive medium may be a variety of media that can transfer heat. For example, the heat conductive medium can include, but is not limited to, heat conductive glue, metal strips for securing, etc.

The rotating shaft 111-1 of the motor rotor 111 sealingly fits the bearing 111-2 and extends out of the lower aluminum casing body 122. A moving impeller 130 is installed on the shaft head of the rotating shaft 111-1. An air guide enclosure 140 is installed on the lower aluminum casing body 122 at an outer side of the moving impeller 130. A gas flow discharged from the moving impeller 130 is blown towards the motor casing body 120 by means of the air guide enclosure 140, and the heat of the motor casing body 120 is simultaneously taken away. For example, the rotation of the moving impellers 130 carry away heat generated by the structures of the motor rotor 111, the stator core 112, and the circuit board 150 in the motor 100 and conducted to the outer surfaces of the upper aluminum casing body 121 and lower aluminum casing body 122.

As shown in FIGs. 1 and 2, the air guide enclosure 140 and the lower aluminum casing body 122 may together define an accommodating cavity 144. The air guide enclosure 140 may be arranged at the outer side of the moving impeller 130. The moving impeller 130 may be arranged on the portion of the rotating shaft 111-1 extending out of the lower aluminum casing body 122, and is located in the accommodating cavity 144. A cooling air duct 180 may be formed between the air guide enclosure 140 and the lower aluminum casing body 122. The cooling air duct 180 may extend from the lower aluminum casing body 122 to the upper aluminum casing body 121. The moving impeller 130 may generate a gas flow B when rotating. The gas flow B may be blown toward the motor casing body 120 via the cooling air duct 180 through the air guide enclosure 140. As the gas flow B passes through the motor casing body 120, it takes heat away from its surface, thereby further improving the cooling effect of the motor 100.

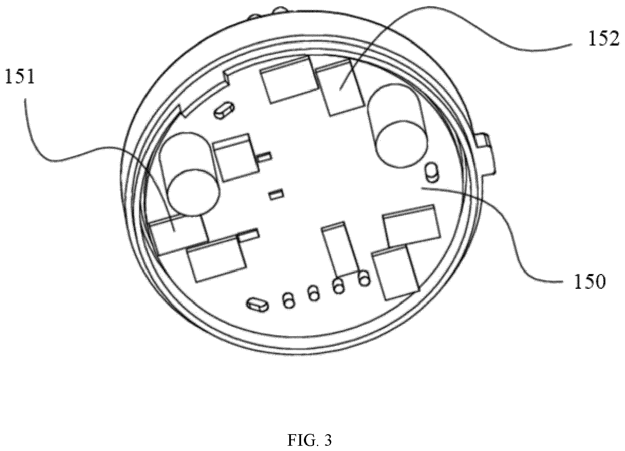

As shown in FIG. 3, the circuit board 150 may be disposed in a space enclosed by the sealingly connected circuit board end cover 160 and the upper aluminum casing body 121. The circuit board 150 may include at least one power device Metal-Oxide-Semiconductor Field-Effect Transistor (MOS transistor) 151 thereon. For example, 3-6 power device MOS transistors 151 may be included on the circuit board 150. Other components may also be included on the circuit board 150. For example, the circuit board 150 may also include a Micro Controller Unit (MCU) 152.

When the motor 100 operates, the MOS transistors 151 on the circuit board 150 operate to generate heat, and the devices (such as the MOS transistor 151 and/or the MCU 182) on the circuit board 150 can be attached to the upper surface of the upper aluminum casing body 121 through a heat conductive glue or other type of heat conductive medium, and conduct the generated heat to the upper surface of the upper aluminum casing body 121 to be in contact with the heat conductive medium, so as to improve the heat dissipation effect of the motor 100.

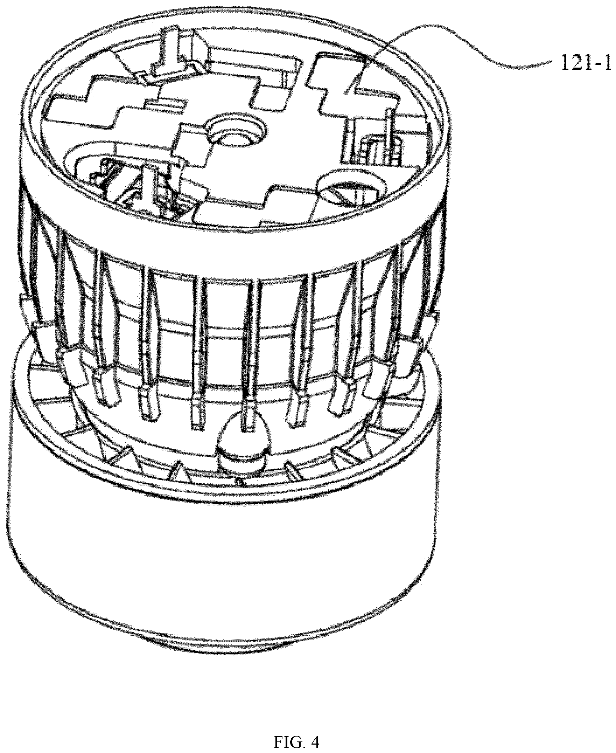

As shown in FIG. 4, the upper surface of the upper aluminum casing body 121 may be provided with a groove 121-1 shaped to mate with a device on the circuit board 150, such as the MOS transistor 151 and/or MCU 182. The groove 121-1 may be filled with a heat conductive medium. The device on the circuit board 150 may be connected to the upper aluminum casing body 121 through a heat conductive medium in the groove 121-1.

The circuit board 150 may further comprise a lead 153, and correspondingly, the circuit board end cover 160 may be provided with a lead outlet hole 161. As shown in FIGs. 1 and 2, the circuit board 150 may include two leads 153. The leads 153 on the circuit board 150 may pass, in a sealed manner, through a lead outlet hole 161 formed in the circuit board end cover 160 and extends outward the upper aluminum casing body 121 and be connected to other structures of the cleaning equipment 200 (not shown). The lead outlet hole 161 and the lead 153 may be sealed with a sealant or other type of sealing medium. The aforementioned sealing media can be a variety of media that can be used for sealing. For example, the sealing medium can include, but is not limited to, a sealant, a sealing film, and the like.

In some embodiments, the maximum dimension of the lead outlet hole 161 may be less than or equal to 3 times the diameter of the lead 153 of the circuit board 150. The minimum size of the lead outlet hole 161 may be no smaller than the diameter of the lead 153 of the circuit board 150.

It is worth mentioning that if the diameter of the lead outlet hole 161 (when the lead outlet hole 161 is circular, the aforementioned diameter may refer to the diameter of a circle; when the lead outlet hole 161 is non-circular, the aforementioned diameter may refer to a maximum dimension) is set to be much larger than the diameter of the lead 153 by 3 times or even 10 times or more for facilitating the installing of the lead 153 in the circuit board 150, sealing of the lead outlet hole 161 is usually accomplished by a rubber gasket. However, the rubber gasket is easily deformed and there must be a clearance between the rubber gasket and the lead 153, so that the sealing effect of the motor may be poor and the waterproofing of the motor may not be achieved. It should be understood that if the diameter of the lead outlet hole 161 is too large, the lead outlet hole 161 and the lead 153 are easily dropped when sealed with a sealing medium; if the diameter of the lead outlet hole 161 is too small, it is not convenient to seal the lead outlet hole 161 with the lead 153 by sealing the lead outlet hole 161 with a sealing medium, for example, it is not convenient to inject a sealant into the lead outlet hole 161. Both of the above cases may reduce the sealing effect of the motor. Some embodiments of the specification creatively set the maximum size of the lead outlet hole 161 to be less than or equal to 3 times the diameter of the lead 153 of the circuit board 150, and seal between the lead outlet hole 161 and the lead 153 by a sealing medium, thereby achieving full sealing in a true sense and improving the sealability of the motor 100.

In some embodiments, the motor 100 also includes a fixed impeller 170. As shown in FIG. 1, the fixed impeller 170 may be installed on the lower aluminum casing body 122 or the air guide enclosure 140 between the moving impeller 130 and the lower aluminum casing body 122. Some embodiments of the specification may enhance the cooling effect of motor casing body 120 by providing the fixed impeller 170 to direct gas flow B to motor casing body 120. In some embodiments, the fixed impeller 170 may be a dual fixed impeller.

Some embodiments of the present disclosure may improve the cooling efficiency of the motor casing body 120 and enhance the heat dissipation effect of the motor 100 through the various embodiments described above. It should be understood that, under the premise that the heat dissipation effect of the motor 100 is good, the normal operation of the motor 100 can still be ensured by increasing the power used by the motor 100, so as to make the wind force of the motor 100 stronger. For example, the suction power of the motor 100 can be increased to over 300 W through the settings in the previous embodiments. In the case of using an equal-volume equal-power device, the suction power of the motor 100 can exceed the suction power of a conventional motor for dry and wet applications in which the plastic housing is not fully-sealed by about 100%, so that the cleaning strength of the cleaning equipment 200 on which the motor 100 is installed can be improved.

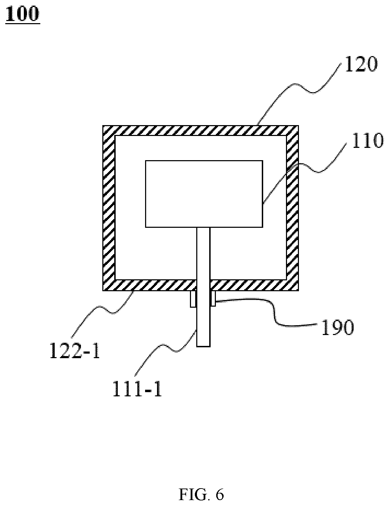

Some embodiments of the specification also disclose a protective structure 190 for the motor 100. As shown in FIG. 6, the motor 100 may include a motor body 110 and a motor casing body 120. The motor body 110 includes a rotating shaft 111-1. One end of the rotating shaft 111-1 extends from the end wall 122-1 of the motor casing body 120 outside the motor casing body 120. The rotating shaft 111-1 and the end wall 122-1 sealingly fit with the protective structure 190, wherein the protective structure 190 includes a seal 191 and a bushing 192. Further details regarding the motor body 110 and the motor casing body 120 can be found above in the specification.

It will be appreciated that the motor 100 may be a brushed motor, a brushless motor, or other types of motors that require water immersion performance testing. The embodiments of the present disclosure will be described with reference to a cleaner motor for dry and wet applications in a cleaning equipment 200, such as a vacuum cleaner and a floor washer.

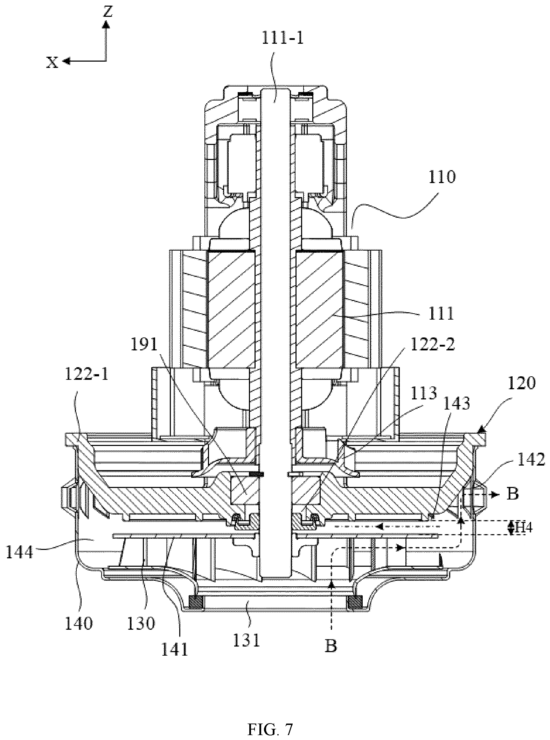

The motor casing body 120 may be provided with a cooling air inlet and a cooling air outlet (not shown), and the motor 100 may further include a cooling fan 113. When the motor 100 operates, the cooling fan 113 can be driven by the rotating shaft 111-1 to rotate, and external air can enter the motor casing body 120 through the cooling air inlet, and after sufficient heat exchange is performed by various heat generating components (e.g. the motor rotor 111) in the motor body 110, is discharged out of the motor casing body 120 through the cooling air outlet, thereby generating a cooling cycle in the motor casing body 120 and improving the cooling effect of the motor 100. When the motor 100 operates, the rotating shaft 111-1 can rotate the moving impeller 130, and the gas flow B flows from the external environment into the air guide enclosure 140 via an inlet 141, passes through the blades of the moving impeller 130, and then flows out of the air guide enclosure 140 via an outlet 142, so as to provide suction at the inlet 141. As shown in FIG. 7, the inlet 141 of the air guide enclosure 140 may be provided at the bottom of the air guide enclosure 140, and the outlet 142 may be provided at the side of the air guide enclosure 140. The gas flow B may form a flow path as shown by the dotted arrow when the motor 100 operates. As shown in FIG. 2, the outlet 142 of the air guide enclosure 140 may also be provided at the top of the air guide enclosure 140. The gas flow B may form a flow path as shown by the solid arrow when the motor 100 operates.

As shown in FIG. 7, one end of the rotating shaft 111-1 may extend out of the motor casing body 120 from the end wall 122-1 of the lower aluminum casing body 122. It will be appreciated that when the motor casing body 120 is integrally formed, the wall portion of the motor casing body 120 from which the rotating shaft 111-1 extends may be formed as an end wall 122-1.

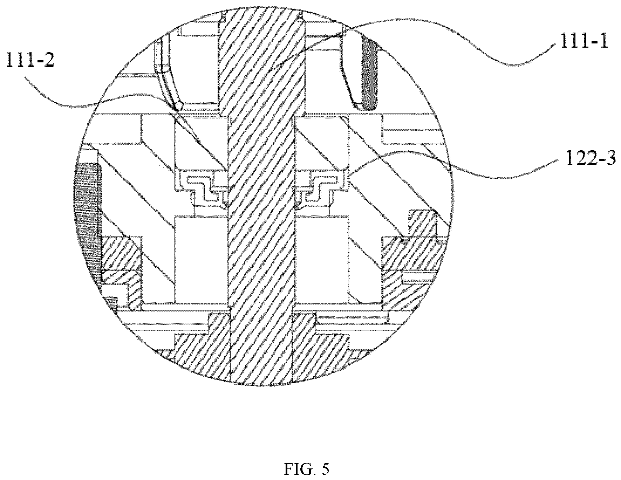

As shown in FIG. 5, the end wall 122-1 of the motor casing body 120 (e.g. a lower aluminum casing body 122) may be provided with a through hole 122-2. A bearing 111-2 and a protective structure 190 are provided in the through hole 122-2. The rotating shaft 111-1 is sealed by the bearing 111-2 and the protective structure 190 and extends out of the motor casing body 120. The aforementioned bearing 111-2 may be a sealed bearing.

It should be noted that when the motor 100 operates, most of the gas flow (e.g. gas flow B) may exit the outlet 142 of the air guide enclosure 140. However, due to the negative pressure of the motor 100, a part of the gas flow (such as the gas flow shown by the single-dot chain line arrow in FIG. 7) may flow along the outer side surface of the end wall 122-1 to the through hole 122-2, and if the through hole 122-2 is not protected, the liquid (such as water vapor, acid-base liquid, etc.) or other impurities entrained in the aforementioned gas flow may enter the water inlet clearance 143 and enter the interior of the motor 100 through the through hole 122-2, which may cause damage to the motor 100 and reduce the service life of the motor 100.

In some embodiments, the motor 100 is provided with a protective structure 190 at the through hole 122-2 to prevent liquid or other impurities from entering the interior of the motor 100 through the through hole 122-2.

The protective structure 190 may be used to prevent external liquids or other impurities from entering the motor 100, affecting the normal operation of the motor body 110. The protective structure 190 may include a variety of structures, for example, the protective structure 190 may include an assembly of one or more of a bearing 111-2, a combination of a seal 191 and a bushing 192, etc.

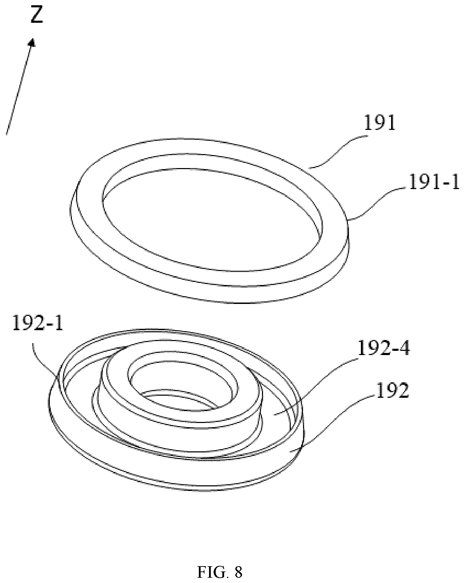

In some embodiments, the protective structure 190 may include a seal 191 and a bushing 192 (as shown in FIG. 8).

The seal 191 may be installed to an outer side surface of the end wall 122-1, and an elastic structure 191-1 surrounding the rotating shaft 111-1 may be provided on the seal 191. As the motor 100 operates, the position of the seal 191 in the motor 100 is relatively fixed. Note that the seal 191 may include only the elastic structure 191-1, for example, an annular elastic ring. The seal may also include an elastic structure 191-1 and other structures, such as an annular mount and an annular resilient ring disposed on the mount.

A bushing 192 may be sleeved over the rotating shaft 111-1 and arranged on the side of the seal 191 facing away from the end wall 122-1. The bushing 192 is provided with an annular protrusion 192-1 arranged coaxially with the rotating shaft 111-1. When the motor 100 operates, the bushing 192 may rotate around the rotating shaft 111-1 driven by the rotating shaft 111-1. In some embodiments, one or more annular protrusions 192-1 may be provided on the bushing 192. As shown in FIG. 8, the bushing 192 may include an annular base 192-4 and an annular protrusion 192-1 disposed on the base. The outer diameter of the annular base 192-4 may be greater than or equal to the outer diameter of the annular protrusion 192-1.

The annular protrusion 192-1 may be embedded within the elastic structure 191-1. The annular protrusion 192-1 being embedded the into the elastic structure 191-1 may mean: the corresponding position of the elastic structure 191-1 is deformed (compressed) by applying pressure to the annular protrusion. The position compressed by the annular protrusion 192-1 is depressed, and the annular protrusion 192-1 is inserted into the depressed position. Since the depression of the elastic structure 191-1 is caused by the compression of the annular protrusion 192-1, the shape of the depression may match the shape of the annular protrusion 192-1. Alternatively, the annular protrusion 192-1 being embedded the into the elastic structure 191-1 may also mean: the elastic structure 191-1 has a structure (e.g. annular groove 191-2 below) that receives an annular protrusion 192-1, wherein the annular protrusion 192-1 enters the structure.

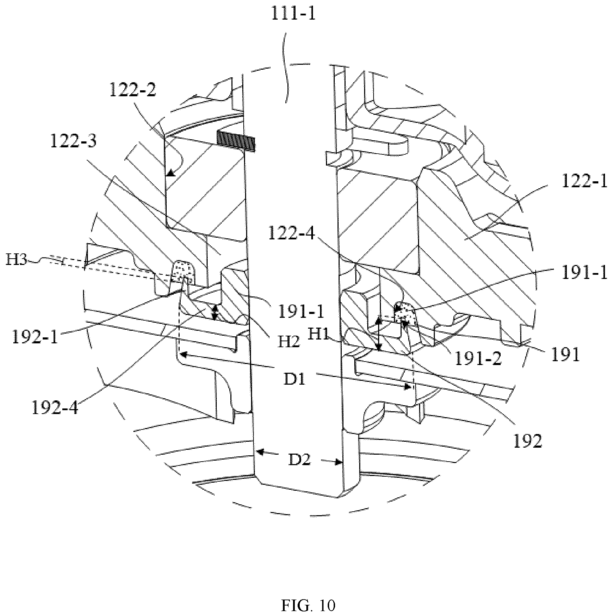

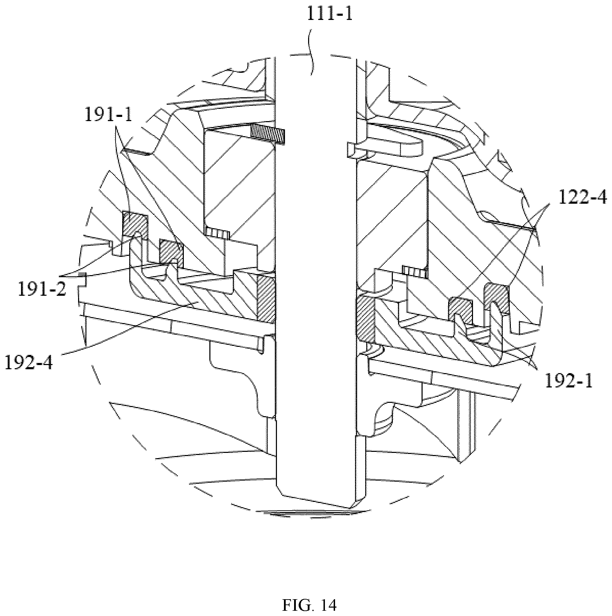

In some embodiments, as shown in FIGs. 10 and 14, the annular protrusion 192-1 may be embedded within the elastic structure 191-1 by an annular groove 191-2 that covers the portion of the annular protrusion 192-1 located within the annular groove 191-2. The annular groove 191-2 surrounds the outer circumferential direction of the rotating shaft 111-1. The elastic structure 191-1 may have one or more annular grooves 191-2 formed therein. Each of the annular protrusion 192-1 may correspond to one annular groove 191-2, and the annular protrusion 192-1 may be inserted into each corresponding annular protrusion 191-2, and the inner wall of the annular protrusion 191-2 is covered outside the corresponding annular protrusion 192-1.

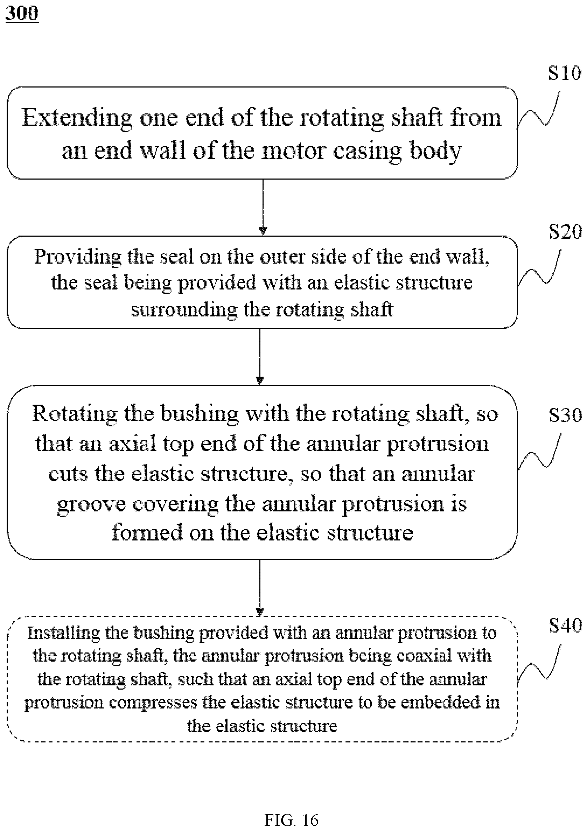

In some embodiments, the bushing 192 can rotate with the rotating shaft 111-1, so that the annular protrusion 192-1 on the bushing 192 cuts the elastic structure 191-1, so that the annular groove 191-2 covering the annular protrusion 192-1 is formed on the elastic structure 191-1. The annular groove 191-2 generated in the aforementioned manner can perfectly fit the annular protrusion 192-1, thus reducing the production and installation difficulty of separately pre-processing the annular groove 191-2. Reference is made to FIG. 16 and the associated description for further details regarding the above-described embodiment of forming the annular groove 191-2. Note that the state in which the elastic structure 191-1 is compressed and depressed is different from the state in which the annular groove 191-2 is formed in the elastic structure 191-1. The difference is that the annular groove 191-2 is formed after the surface of the elastic structure 191-1 is cut, and the surface of the elastic structure 191-1 is not cut by the annular protrusion 192-1 in a state where the elastic structure 191-1 is compressed and depressed. The state in which the elastic structure 191-1 is compressed and depressed may be a state in which the bushing 192 and the seal 191 are fitted but the motor 100 is not started to operate, and the state in which the annular groove 191-2 is formed on the elastic structure 191-1 may be a state in which the motor 100 operates for a period of time after being started.

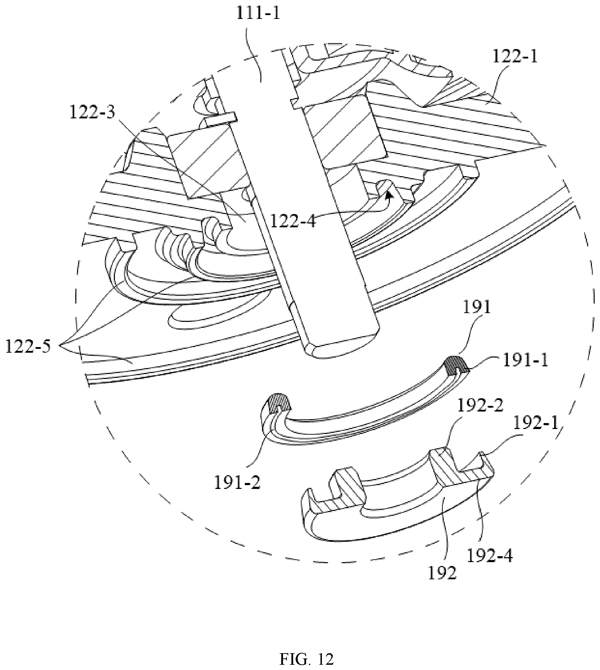

It will be appreciated that, in order to facilitate cutting of the seal 191 by the rotating annular protrusion 192-1, the radial width of the annular protrusion 192-1 may gradually increase from a direction close to the motor casing body 120 to a direction away from the motor casing body 120, i.e. presenting a tip shape as shown in FIG. 12, wherein the Z direction in FIGs. 7, 8 and 11 is an axial direction, and the Z direction is also an axial direction of the rotating shaft 111-1. The X direction in FIG. 7 may be a radial direction.

In other embodiments, the elastic structure 191-1 may be pre-formed with an annular groove 191-2. The annular protrusion 192-1 may be inserted into the corresponding annular groove 191-2 during installation, so that the annular groove 191-2 covers the annular protrusion 192-1.

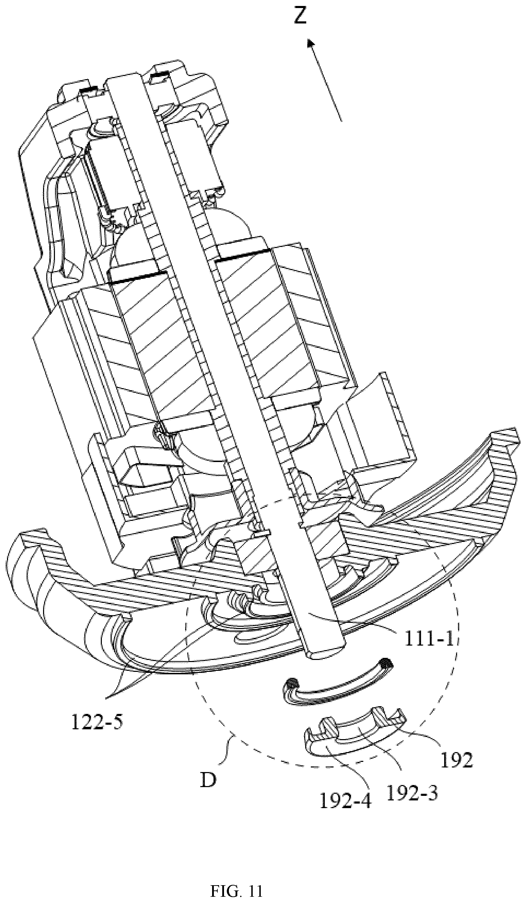

As shown in FIGs. 10 and 11, when one end of the rotating shaft 111-1 protrudes from the end wall 122-1 to the motor casing body 120 through the through hole 122-2, a clearance 122-3 may be created at the interface of the rotating shaft 111-1 and the end wall 122-1 to allow liquid or other impurities to enter the motor casing body 120.

Some embodiments of the present specification disclose that the annular protrusion 192-1 provided on the bushing 192 is embedded in the annular groove 191-2 on the seal 191 in a one-to-one correspondence manner, and both the annular groove 191-2 and the bushing 192 surround the circumferentially outer side of the rotating shaft 111-1, so that the bushing 192, the annular protrusion 192-1, and the seal 191 form a closely connected integral structure and surround the circumferentially outer side of the rotating shaft 111-1. At the same time, the bushing 192 is sleeved on the rotating shaft 111-1, so that the space inside the bushing 192 is closed off by the rotating shaft 111-1, and there is no clearance between the bushing and the rotating shaft 111-1. The seal 191 is installed on the outer side surface of the end wall 122-1, therefore, there is also no clearance between the integral structure and the end wall 122-1. Thus, a closed barrier can be defined between the integral structure formed by the bushing 192, the annular protrusion 192-1 and the seal 191, the end wall 122-1, and the rotating shaft 111-1. The closed barrier can enclose the clearance 122-3 between the rotating shaft 111-1 and the end wall 122-1, so that external liquid or other impurities can be effectively prevented from entering the interior of the motor 100 via the aforementioned clearance 122-3, improving the protection performance of the motor 100 and improving the sealing performance of the motor 100.

It should be noted that, as shown in FIG. 10, the inner wall of the annular groove 191-2 is coated on the outer side of the corresponding annular protrusion 192-1, namely, all the inner walls of the annular groove 191-2 are completely fitted on the annular protrusion 192-1, so that the two are in close contact, but the rotation of the bushing 192 relative to the seal 191 driven by the rotating shaft 111-1 is not affected.

It will be appreciated that as the motor 100 operates, the rotating shaft 111-1 may rotate the annular protrusion 192-1 of the bushing 192 relative to the annular groove 191-2. After a period of use or factory testing, a slight slit may be formed between the inner wall of the annular groove 191-2 and the axial top end of the corresponding annular protrusion 192-1, which may reduce friction between the annular protrusion 192-1 in the bushing 192 and the seal 191 to avoid damage to the seal 191 and the bushing 192 caused by long-term frictional heat generation. In addition, it should be noted that when the bushing 192 is rotated at a high speed by the rotating shaft 111-1 for a certain period of time, a water film may be generated on the seal 191, and the water film may play a sealing role while reducing friction between the seal 191 and the bushing 192.

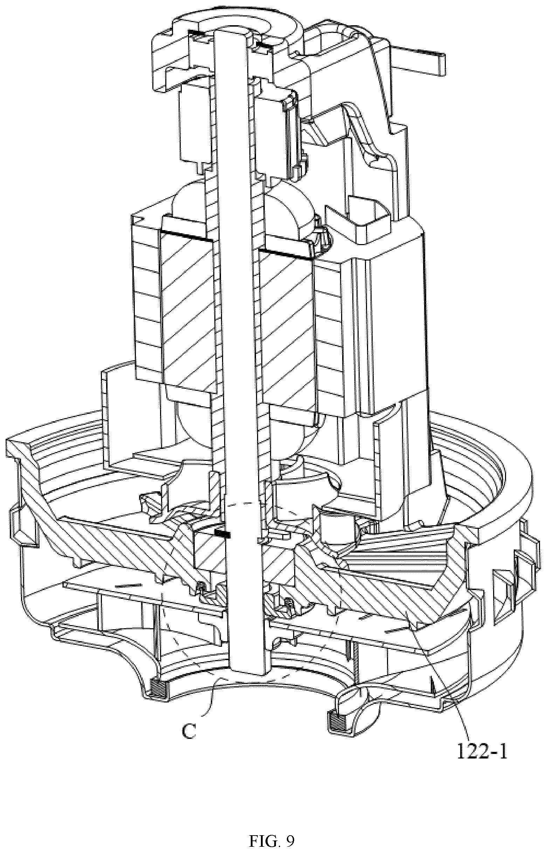

Referring to FIGs. 7 to 14, in order for the annular groove 191-2 on the seal 191 to be disposed around the circumferential outer side of the rotating shaft 111-1, the elastic structure 191-1 may continuously extend along the circumferential direction of the rotating shaft 111-1. That is, the elastic structure 191-1 may have an annular shape so that an annular groove 191-2 surrounding the rotating shaft 111-1 is provided on the elastic structure 191-1. In some embodiments, as shown in FIG. 8, the elastic structure 191-1 may be annular in shape. In other embodiments, the elastic structure 191-1 may also be other shapes of rings, such as a square outer ring and an annular inner ring.

The annular protrusion 192-1 may be made of a rigid material and may have a Rockwell hardness in a range of 15-35 HRC to ensure a good seal and not deform upon rotation, thereby cutting the annular groove 191-2 to be formed on the elastic structure 191-1 upon rotation with the rotating shaft 111-1. In some embodiments, other structures of the bushing 192 and the annular protrusion 192-1 may be made of the same material or may be made of different materials. In some embodiments, the material of the bushing 192 may be metal or plastic.

The elastic structure 191-1 may be made of an elastic material with an elastic pull-up amount of 150%-200% to ensure that the elastic structure 191-1 is not cut by the annular protrusion 192-1, but only collapsed, at the time of installation, i.e. before no operative cutting. At the same time, the annular groove 191-2 in the elastic structure 191-1 can also cover the annular protrusion 192-1 after being formed, so as to achieve a sealing effect. In some embodiments, the seal 191 may be made of silicone, teflon, or vinyl. In some embodiments, the seal 191 may also be other materials, such as rubber, latex, etc.

The annular protrusion 192-1 is harder than the elastic structure 191-1. For example, when the elastic structure 191-1 has an elastic pull-up of 150% to 200%, the annular protrusion 192-1 may have a Rockwell hardness of 25 HRC. By the aforementioned arrangement, it can be ensured that the elastic structure 191-1 cooperates with the annular protrusion 192-1 to seal the motor 100 and play a protective role. By setting the strength of the elastic module of the elastic structure 191-1 and the annular protrusion 192-1 according to the aforementioned value, it can be ensured that the protective structure 190 has a better sealing effect, thereby ensuring the sealing performance of the motor 100.

In some embodiments, the elastic structure 191-1 may be disposed on the bushing 192 and the annular protrusion 192-1 may be disposed on the seal 191, i.e. rotation of the bushing 192 may cause the elastic structure 191-1 to rotate while the position of the annular protrusion 133-2 is relatively fixed. It will be appreciated that when the elastic structure 191-1 is disposed on the bushing 192 and the annular protrusion 192-1 is disposed on the seal 191, the elastic structure 191-1 on the bushing 192 may be made of silicone, teflon, or vinyl and the annular protrusion 192-1 on the seal 191 may be made of metal or plastic.

In some embodiments, an annular mounting groove 122-4 may be provided on the outer side surface of the end wall 122-1. The installing groove 122-4 may be coaxially arranged with the rotating shaft 111-1. The elastic structure 191-1 may be clamped into the installing groove 122-4 to facilitate the installation and replacement of the elastic structure 191-1.

In other embodiments, a liquid elastomeric material may also be injected to the installing groove 122-4, and the elastic structure 191-1 may be formed after solidification. The elastic structure 191-1 formed in the aforementioned manner has good adhesion to the end wall 122-1, and even if the elastic structure 191-1 is deformed to form the annular groove 191-2, it is not easily removed from the installing groove 122-4.

As shown in FIGs. 11 to 14, an installing hole 192-3 may be provided in the bushing 192. The rotating shaft 111-1 may pass through the installing hole 192-3, and a circumferential outer surface of the rotating shaft 111-1 may abut an inner surface of the installing hole 192-3. The bushing 192 may also include an inner barrel portion 192-2. The inner barrel portion 192-2 may be provided on the circumferential inner side of the annular protrusion 192-1, and a hollow portion in the shaft on the inner barrel portion 192-2 may form the aforementioned installing hole 192-3. The inner barrel portion 192-2 may be sleeved on the rotating shaft 111-1, and at least part of the structure of the inner barrel portion 192-2 may protrude into the through hole 122-2 to ensure the stability of the structure thereof. The circumferential outer surface of the rotating shaft 111-1 may conform to the inner surface of the inner barrel portion 192-2 to prevent external liquids or other impurities from entering the motor 100. In some embodiments, the bushing 192 is in an interference fit with the rotating shaft 111-1, i.e. the inner barrel portion 192-2 and the rotating shaft 111-1, to prevent play between the rotating shaft 111-1 and the bushing 192.

In some embodiments, the inner barrel portion 192-2 may be attached by bonding, snapping, or the like. In some embodiments, to ensure a sealing effect between the inner barrel portion 192-2 and the rotating shaft 111-1, a sealant or other type of sealing medium may be present between the inner barrel portion 192-2 and the rotating shaft 111-1.

In some embodiments, the radial thickness of the inner barrel portion 192-2 may be greater than the radial thickness of the annular protrusion 192-1, and increasing the radial thickness of the inner barrel portion 192-2 may increase the structural strength of the overall bushing 192. In some embodiments, the axial height of the inner barrel portion 192-2 (the axial direction of the inner barrel portion 192-2 is equivalent to the axial direction of the rotating shaft 111-1) may be greater than the axial height of the annular protrusion 192-1. The axial height of the inner barrel portion 192-2 is high to further ensure that the bushing 192 is tightly connected with the rotating shaft, and to further provide a protective effect against liquid.

The annular protrusion 192-1 may be a ring-shaped member configured to protrude from the bushing 192 toward the seal 191 as shown in FIG. 12, thereby making the bushing 192 simple in structure and easy to machine. Illustratively, the extending direction of the annular protrusion 192-1 may extend along the axial direction of the rotating shaft 111-1, so that the frictional force of the annular protrusion 192-1 with the annular groove 191-2 may be small when the rotating shaft 111-1 rotates.

As shown in FIGs. 7 to 14, an annular groove 191-2 may be provided on the surface of the seal 191 facing the bushing 192, and an annular protrusion 192-1 may be provided on the surface of the bushing 192 facing the seal 191. This facilitates machining and also allows a more compact arrangement of the seal 191 and the bushing 192 in the radial direction of the rotating shaft 111-1.

In some embodiments, the outer surface of the axial top end of the annular protrusion 192-1 may be configured to mate with the inner wall of the corresponding annular groove 191-2 such that the inner wall of the annular groove 191-2 wraps over the axial top end of the corresponding annular protrusion 192-1, enhancing the protective effectiveness of the protective structure 190. It will be appreciated that in order to avoid the annular protrusion 192-1 penetrating the seal 191, affecting the strength of the seal 191, the axial depth of the annular groove 191-2 (the axial direction of the annular groove 191-2 is also the axial direction of the rotating shaft 111-1) may be made less than the axial height of the seal 191 at the rotating shaft 111-1.

In some embodiments, as shown in FIG. 11, the axial height H1 of the annular protrusion 192-1 (the axial direction of the annular groove 191-2 is also the axial direction of the rotating shaft 111-1) is 1.5-4.5 mm. Note that if the axial height of the annular protrusion 192-1 is too small, the portion where the annular protrusion 192-1 meets the annular groove 191-2 is likely to come into contact with the liquid or other impurities introduced through the water inlet clearance 143, thereby possibly affecting the protective effect of the protective structure 190 against the liquid or other impurities. If the axial height of the annular protrusion 192-1 is too large, the rotation of the bushing 192 by the rotating shaft 111-1 may consume more energy and easily generate more heat, and the stability of the overall structure when the bushing 192 rotates may be poor. By setting the axial height of the annular protrusion 192-1 in the aforementioned range, the heat generation and energy consumption can be reduced as much as possible while ensuring the protective effect.

In some embodiments, the ratio of the axial height H1 of the annular protrusion 192-1 to the outer diameter D1 of the bushing 192 may range from 0.05 to 0.25. The outer diameter of the bushing 192 may refer to the outer diameter of the annular base 192-4 of the bushing 192. In the embodiment shown in FIGs. 8 and 10, the outer diameter of the annular base 192-4 is also equal to that of the annular protrusion 192-1. If the ratio of the axial height H1 of the annular protrusion 192-1 to the outer diameter of the bushing 192 is too small, the annular protrusion 192-1 may not provide a good protective effect against the liquid. If the ratio of the axial height H1 of the annular protrusion 192-1 to the outer diameter D1 of the bushing 192 is too large (e.g. the axial height H1 of the annular protrusion 192-1 is too large or the outer diameter of the bushing 192 is too small), other structures of the bushing 192 (e.g. structures between the inner barrel portion 192-2 and the annular protrusion 192-1) cannot support the annular protrusion 192-1, and the structural strength of the entire bushing 192 in high-speed rotation is difficult to ensure. With the above arrangement, while ensuring the protective effect of the annular protrusion 192-1 against liquid, the structure of the bushing 192 is more stable, and other structures of the bushing 192 can support the movement of the annular protrusion 192-1 thereof, avoiding structural damage due to high-speed rotation.

In some embodiments, the ratio of the axial height H1 of the annular protrusion 192-1 to the axial height H2 of the bushing 192 ranges from 1 to 4. The axial height H2 of the bushing refers to the axial height of the annular base 192-4 of the bushing 192. Similar to the principles described above, if the ratio of the axial height H1 of the annular protrusion 192-1 to the radial height H2 of the bushing 192 is too large (e.g. the axial height of the annular protrusion 192-1 is too large or the axial height of the bushing 192 is too small), other structures of the bushing 192 (e.g. structures between the inner barrel portion 192-2 and the annular protrusion 192-1) cannot support the annular protrusion 192-1, and the structural strength of the entire bushing 192 in high-speed rotation is difficult to ensure. With the above arrangement, while ensuring the protective effect of the annular protrusion 192-1 against liquid, the structure of the bushing 192 is more stable, and other structures of the bushing 192 can support the movement of the annular protrusion 192-1 thereof, avoiding structural damage due to high-speed rotation.

In some embodiments, the ratio of the axial height H1 of the annular protrusion 192-1 to the diameter D2 of the rotating shaft 111-1 may range from 0.2 to 0.8. If the ratio of the axial height H1 of the annular protrusion 192-1 to the diameter D2 of the rotating shaft 111-1 is too small, the annular protrusion 192-1 may not provide a good protective effect against the liquid. If the ratio of the axial height of the annular protrusion 192-1 to the diameter of the rotating shaft 111-1 is too large, it means that the axial height H1 of the annular protrusion 192-1 is set too high, which generates more heat and consumes more energy. By defining the ratio of the axial height of the annular protrusion 192-1 to the diameter of the rotating shaft 111-1 according to the above range, it is possible to reduce the generation of heat and the consumption of energy as much as possible while securing the protective effect.

In some embodiments, the ratio of the axial depth H3 of the annular protrusion 192-1 into the elastic structure 191-1 to the axial height H1 of the annular protrusion 192-1 ranges from 0.1 to 0.3. It can be understood that if the annular protrusion 192-1 is embedded too deeply into the elastic structure 191-1, the contact area with the seal 191 may be too large, and the support may cause the bushing 192 to generate more heat and more energy consumption as the rotating shaft 111-1 rotates. If the annular protrusion 192-1 is inserted too shallow into the elastic structure 191-1, the contact area with the seal 191 may be too small, and thus too little contact area between the annular protrusion 192-1 and the annular groove 191-2, and external liquid or other impurities may easily break through the barrier and enter the motor 100, reducing the protective effect of the protective structure 190. By defining the ratio of the axial depth of the annular protrusion 192-1 embedded in the elastic structure 191-1 to the axial height of the annular protrusion 192-1 within the above range, both the protective effect is ensured and the generation of heat and the consumption of energy are reduced as much as possible.

In some embodiments, the ratio of the axial height H1 of the annular protrusion 192-1 to the height H4 of the water inlet clearance 143 ranges from 0.4 to 2.0. The water inlet clearance 143 may refer to a distance between the end wall 122-1 and the installing plate 131 of the moving impeller 130 near one end of the motor casing body 120 in the axial direction of the rotating shaft 111-1. The height of the water inlet clearance 143 directly affects the amount of water that may enter the motor body, the axial height of the annular protrusion 192-1 directly affects the protective effect against the liquid. The greater the amount of water, the higher the axial height of the annular protrusion 192-1 may need to be. However, as described above, since the axial height of the annular protrusion 192-1 is excessively large, it is possible to generate more heat and consumes more energy. By defining the range of the aforementioned ratio, it is possible to reduce heat generation and energy consumption as much as possible while securing the protective effect of the annular protrusion 192-1.

As shown in FIGs. 11 and 12, in some embodiments, the outer side surface of the end wall 122-1 is further provided with at least one baffle ring 122-5. The baffle ring 122-5 may surround the circumferential outer side of the seal 191 and extend in a direction away from the end wall 122-1. When the number of the baffle rings 122-5 is plural, the inner diameter of each baffle ring 122-5 is different in size, and the baffle ring 122-5 having a larger inner diameter is sleeved outside the baffle ring 122-5 having a smaller inner diameter. In some embodiments, the plurality of baffle rings 122-5 may be arranged coaxially. In FIG. 12, the outer side surface of the end wall 122-1 is provided with three baffle rings 122-5. By providing the baffle ring 122-5, it is possible to further prevent liquid or other impurities from entering the interior of the motor 100 through the aforementioned through hole 122-2, thereby improving the sealability of the motor 100.

As shown in FIGs. 7 to 12, the seal 191 may include an annular groove 191-2 and the bushing 192 may include a corresponding annular protrusion 192-1.

In some embodiments, the bushing 192 may be further provided with a plurality (e.g. two, three, five, etc.) of annular protrusions 192-1 of different diameters. The plurality of annular protrusions 192-1 are arranged concentrically. For each of the plurality of annular protrusions 192-1, a corresponding elastic structure 191-1 may be provided on the seal 191. The annular protrusion 192-1 is embedded within the corresponding elastic structure 191-1.

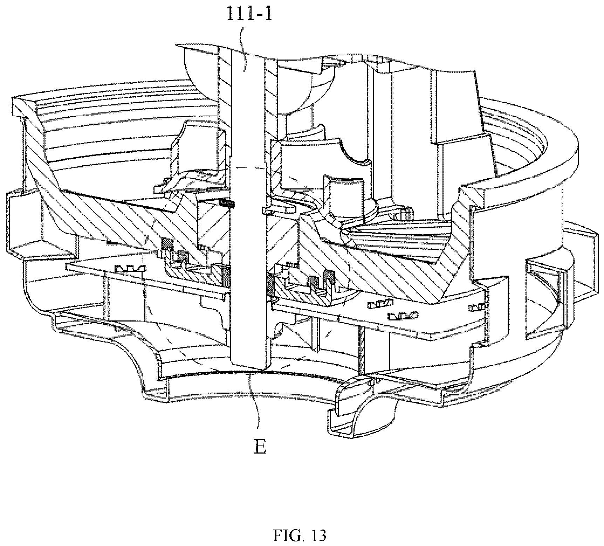

As shown in FIGs. 13 and 14, the bushing 192 may include two annular protrusions 192-1 thereon. The seal 191 may include two elastic structures 191-1. The two annular protrusions 192-1 are inserted into the annular grooves 191-2 of the two elastic structures 191-1 in one-to-one correspondence. In some embodiments, the seal 191 may include another number of annular grooves 191-2 and the bushing 192 may include a corresponding number of annular protrusions 192-1, which will not be described in detail herein.

Some embodiments of the present disclosure may set multiple guarantees to motor 100 by providing multiple sets of cooperating annular protrusions 192-1 and elastic structures 191-1. The radially inner annular protrusion 192-1 and elastic structure 191-1 also provide protective effect in the event of failure of the radially outer annular protrusion 192-1 and elastic structure 191-1. Taking the case where two annular protrusions 192-1 are provided on the bushing 192 and two elastic structures 191-1 are provided on the seal 191 as an example, in the case where one set of the annular protrusions 192-1 and the elastic structures 191-1 on the radially outer side fails, the one set of the annular protrusions 192-1 and the elastic structures 191-1 on the radially inner side can also play a protective role.

In some embodiments, the height in the axial direction of the radially outer annular protrusion 192-1 on the bushing 192 may be equal to the height in the axial direction of the radially inner annular protrusion 192-1 on the bushing 192. The height in the axial direction of the rotating shaft 111-1 of the elastic structure 191-1 corresponding to the radially outer annular protrusion 192-1 of the bushing 192 is higher than the height in the axial direction of the rotating shaft 111-1 of the elastic structure 191-1 corresponding to the radially inner annular protrusion 192-1 of the bushing 192.

In some embodiments, the plurality of annular grooves 191-2 may be offset from each other in the axial direction of the rotating shaft 111-1, that is, the axial height of each annular groove 191-2 (the axial direction of the annular groove 191-2 may also be the axial direction of the rotating shaft 111-1) may be different. Accordingly, the plurality of annular protrusions 192-1 may be offset from each other in the axial direction of the rotating shaft 111-1, that is, the height in the axial direction of each annular protrusion 192-1 (the axial direction of the annular protrusion 192-1 may also be the axial direction of the rotating shaft 111-1) may be different. As shown in FIGs. 13 and 14, the axial height of the radially outer annular protrusion 192-1 on the bushing 192 may be greater than the axial height of the radially inner annular protrusion 192-1 on the bushing 192. With the foregoing arrangement, in one aspect, multiple protective safeguards can be provided for the motor 100. On the other hand, even if a clearance is generated between the corresponding annular protrusion 192-1 and the annular groove 191-2 due to an excessive use time or the like, the length of a passage through which liquid or other foreign substances enter the through hole 122-2 becomes long, thereby improving the protective effect of the motor 100 to some extent.

In some embodiments, the protective structure 190 may also include only the bushing 192. The bushing 192 may be disposed on an outer side of the end wall 122-1. An inner diameter of the annular protrusion 192-1 on the bushing 192 is greater than a diameter of the through hole 122-2. An axial distance of the annular protrusion 192-1 from the outer side of the end wall 122-1 is greater than zero and less than a predetermined distance threshold. At this time, the annular protrusion 192-1 may cover the through hole 122-2 from the outside. At the same time, the axial top portion of the annular protrusion 192-1 is very close to the end wall 122-1, but does not contact. When the motor 100 operates, the bushing 192 can rotate at a high speed driven by the rotating shaft 111-1 and form a water film, thereby preventing liquid or other impurities from entering the through hole 122-2 and ensuring the sealability of the motor 100.

The present specification also discloses a cleaning equipment 200 equipped with a motor 100. The case where the cleaning equipment 200 is a suction cleaner or a floor washer is described as an example, and similar to the case where the cleaning equipment is another type, the specification thereof will be omitted.

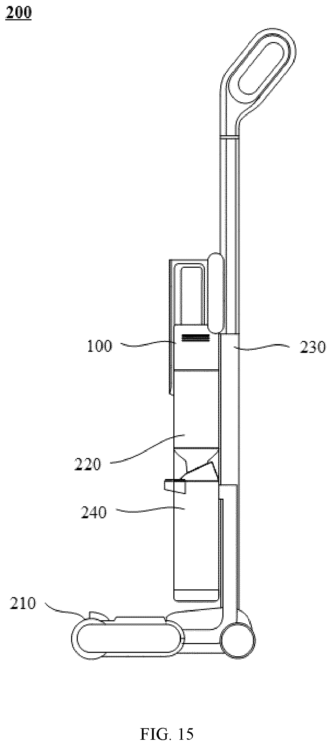

As shown in FIG. 15, the cleaning equipment 200 may include a main body 230 on which the motor 100 is also provided, and a floor brush 210, a dust cup 220, and a structural part 240 provided on the main body 230. Here, the floor brush 210 is configured to clean a surface to be cleaned. The floor brush 210, the structural part 240, the dust cup 220, and the motor 100 are fluidly connected.

When the cleaning equipment 200 is a floor washer, the structural part 240 may be a sewage tank or a fresh water tank. When the cleaning equipment 200 is a vacuum cleaner, the structure 240 may be a dust cup.

The cleaning equipment 200 includes the motor 100 as described in any of the above embodiments. It will be understood that the structure, function, operation principle, etc. of the motor 100 have been described in detail, and will not be described in detail herein.

FIG. 16 is a schematic flowchart of an installation method for a motor according to some embodiments of the specification.

In some embodiments, the process 300 may be configured to install the motor 100 shown in FIGs. 6 to 14. As shown in FIG. 16, process 300 may include the following steps:

S10, extending one end of the rotating shaft from an end wall of the motor casing body.

S20, providing the seal on the outer side of the end wall, the seal being provided with an elastic structure surrounding the rotating shaft.

The outer side surface of the end wall 122-1 may be formed with an installing groove 122-4, which may surround the circumferential outer side of the rotating shaft 111-1. In some embodiments, a liquid elastomeric material (e.g. liquid silicone) may be injected to the installing groove 122-4 and solidified to form the elastic structure 191-1. The elastic structure 191-1 provided in this manner has good adhesion to the end wall 122-1, and is not easily removed from the installing groove 122-4 even when the annular groove 191-2 is provided in the elastic structure 191-1.

In some embodiments, a pre-manufactured elastic structure 191-1 may also be clamped into the installing groove 122-4 to facilitate replacement.

S30, installing the bushing provided with an annular protrusion to the rotating shaft, the annular protrusion being coaxial with the rotating shaft, such that an axial top end of the annular protrusion compresses the elastic structure to be embedded in the elastic structure.

In some embodiments, the bushing 192 may be sleeved on the rotating shaft 111-1 with the annular protrusion 192-1 coaxial with the rotating shaft 111-1; the bushing 192 is urged toward the end wall 122-1 until the annular protrusion 192-1 is depressed within the elastic structure 191-1. In some embodiments, the depth to which the annular protrusion 192-1 is depressed into the elastic structure 191-1 may range from 0.3 mm to 0.6 mm. In some embodiments, the depth to which the annular protrusion 192-1 is depressed into the elastic structure 191-1 may be 0.12% to 0.2% of its axial height. By limiting the depth or ratio at which the axial top end of the annular protrusion 192-1 is depressed into the elastic structure 191-1, on the one hand, it is possible to prevent the axial top end of the annular protrusion 192-1 from depressing into the elastic structure 191-1 too far to penetrate the seal 191 (e.g. penetrating the seal 191 in step S40 described below), causing damage to the bushing 192 or the seal 191; on the other hand, it is possible to prevent the axial top end of the annular protrusion 192-1 from depressing into the elastic structure 191-1 too shallow, thereby affecting the sealability of the protective structure 190. It will be appreciated that upon completion of step S30, the elastic structure 191-1 may be in a compressed and depressed state. At this time, when motor 100 is not yet turned on, its current state can be either the factory state or the state before testing.

In some embodiments, the bushing 192 (e.g. the inner barrel portion 192-2 of the bushing) may be interference fit onto the rotating shaft 111-1, thereby making the connection between the bushing 192 and the rotating shaft 111-1 more reliable and also preventing liquids or impurities from entering the motor 100 from the clearance therebetween.

In some embodiments, a graduation line may also be provided on the annular protrusion 192-1 of the bushing 192 to facilitate determining whether the bushing 192 is installed in place.

Some embodiments of the present disclosure may install the protective structure 190 of the motor 100 by the methods described above. In some embodiments, when the protective structure 190 of the motor 100 is installed, the process 300 may further provide an upper annular groove 191-2 on the elastic structure 191-1 as follows.

S40, rotating the bushing with the rotating shaft, so that the axial top end of the annular protrusion cuts the elastic structure, so that an annular groove covering the annular protrusion is formed on the elastic structure.

When the motor 100 is installed, the elastic structure 191-1 may not be provided with an annular groove 191-2 before the bushing 192 is installed, and the side thereof remote from the end wall 122-1 may be planar. Upon assembly of the bushing 192, the annular protrusion 192-1 on the bushing 192 may contact the side of the elastic structure 191-1 remote from the end wall 122-1 and be compressed by the annular protrusion 192-1. In some embodiments, the ratio of the compressed volume of the elastic structure 191-1 to the original volume is 70% to 95%. By defining the ratio of the compressed volume of the elastic structure 191-1 to the original volume, it is avoided that the compression of the elastic structure 191-1 is too small, resulting in that the annular groove 191-2 formed after the elastic structure 191-1 is cut cannot cover the annular protrusion 192-1, so as to reduce the sealing performance of the motor 100, and also avoided that the compression of the elastic structure 191-1 is too large, resulting in that the friction force between the elastic structure 191-1 and the annular protrusion 192-1 is too large, resulting in that the elastic structure 191-1 or the annular protrusion 192-1 is damaged or a large amount of energy dissipation is caused when the bushing 192 rotates at a high speed when the motor 100 operates.

In some embodiments, the motor 100 can be started to drive the rotating shaft 111-1 to rotate the bushing 192, so that the axial top of the annular protrusion 192-1 on the sleeve 192 can be cut by rotating the seal 191, causing elastic deformation or plastic deformation of the seal 191, corresponding to the formation of an annular groove covering the axial top of the annular protrusion 192-1.

The annular groove 191-2 cut in the above-described manner can correspond to the annular protrusion 192-1 on the bushing 192 one by one, and can cover the annular protrusion 192-1 more reliably to avoid the clearance. It is understood that the elastic structure 191-1 may be in a state where the annular groove 191-2 is formed thereon after the step S40 is completed. At this time, the motor 100 has been started, and the state at this time may be a state during use by the user.

Since both the seal 191 and the bushing 192 surround the circumferential outer side of the rotating shaft 111-1, the bushing 192, the annular protrusion 192-1, and the seal 191 are formed as a unitary structure and surround the circumferential outer side of the rotating shaft 111-1. Since the bushing 192 is sleeved on the rotating shaft 111-1, so that the space inside the bushing 192 is closed off by the rotating shaft 111-1, and there is no clearance between the bushing 192 and the rotating shaft 111-1. Since the seal 191 is installed on the outer side surface of the end wall 122-1, there is no clearance between one side of the end wall 122-1 and the end wall 122-1. Thus, a closed barrier is be defined between the integral structure formed by the bushing 192, the annular protrusion 192-1 and the seal 191, the end wall 122-1, and the rotating shaft 111-1. The closed barrier also encloses the clearance 122-3 between the rotating shaft 111-1 and the end wall 122-1, thereby effectively preventing external fluid from entering the interior of the motor 100 through the aforementioned clearance 122-3, and improving the protection performance of the motor 100.

In some embodiments, the bushing 192 may be a rigid material (e.g. metal or plastic) and the elastic structure 191-1 may be a resilient material (e.g. rubber, silicone, teflon, or vinyl). The hardness of the bushing 192 is greater than the hardness of the elastic structure 191-1 so that the annular protrusion 192-1 on the bushing 192 when in frictional contact with the elastic structure 191-1 can partially cut the less stiff elastic structure 191-1 to create the annular groove 191-2.

In practice, the rotating shaft 111-1 may be driven to rotate before the motor 100 leaves the factory to form the annular groove 191-2 in the elastic structure 191-1, or the user may complete the operation of cutting the annular groove 191-2 on his own in the first use after purchasing the motor 100.

In some embodiments of the present disclosure, the cutting of the elastic structure 191-1 may be accomplished by the process 300 described above to obtain an annular groove 191-2 that may better fit the annular protrusion 192-1 on the bushing 192, avoiding machining, installation difficulties, and improving the sealability of the motor 100 when producing the annular groove 191-2 separately.

Having thus described the basic concepts, it should be apparent to those skilled in the art that the foregoing detailed disclosure is by way of example only and is not to be construed as limiting the present description. While not explicitly described herein, various modifications, improvements, and adaptations to the present specification may occur to those skilled in the art. Such modifications, improvements, and adaptations are intended to be suggested herein, and are intended to be within the spirit and scope of the exemplary embodiments of this disclosure.

Meanwhile, the specification uses specific words to describe the embodiments of the specification. Reference to "one embodiment", "an embodiment", and/or "some embodiments" means that a particular feature, structure, or characteristic described in connection with the embodiments described herein. Therefore, it is emphasized and noted that two or more references to "an embodiment" or "one embodiment" or "an alternative embodiment" in various places throughout this specification do not necessarily refer to the same embodiment. Furthermore, some of the features, structures, or characteristics of one or more embodiments of the present specification may be combined as appropriate.

Furthermore, the order of processing elements and sequences, use of alphanumeric characters, or use of other names described in this specification are not intended to limit the order in which the processes and methods described herein may be performed, unless explicitly recited in the claims. While certain presently considered useful embodiments of the invention have been discussed in the foregoing disclosure by way of various examples, it is to be understood that such detail is solely for that purpose and that the appended claims are not limited to the disclosed embodiments but, on the contrary, are intended to cover all modifications and equivalent arrangements included within the spirit and scope of the embodiments of the present disclosure. For example, while the system components described above may be implemented by hardware devices, they may also be implemented by software-only solutions, such as installing the described systems on existing servers or mobile devices.

Similarly, it should be noted that in the foregoing description of embodiments of the present disclosure, various features are sometimes grouped together in one embodiment, figure, or description thereof for the purpose of streamlining the disclosure so as to facilitate an understanding of one or more embodiments of the invention. This method of disclosure, however, does not imply that the subject of the specification requires more features than are recited in the claims. In fact, less than all features of a single embodiment are disclosed above.

In some embodiments, numbers describing component, attribute quantities are used, and it should be understood that such numbers are modified in some instances by the use of the modifiers "about", "approximately", or "substantially". Unless otherwise indicated, "about", "approximately", or "substantially" indicates that the number is allowed to vary by ± 20%. Accordingly, the numerical parameters used in the specification and claims are approximations that may vary depending upon the desired characteristics of the individual embodiments. In some embodiments, the numerical parameters should take into account the specified significant digits and employ a general digit retention method. Notwithstanding that the numerical ranges and parameters setting forth the broad scope of the ranges are approximations in some embodiments of the present disclosure, the numerical values set forth in the specific embodiments are reported as precisely as possible.

Each patent, patent application, patent application publication, and other material, such as articles, books, descriptions, publications, documents, and the like, cited in this specification is hereby incorporated by reference in its entirety. Except in the application history documents which are inconsistent with or conflict with the contents of this specification, the documents (currently or later attached to this specification) which limit the broadest scope of the claims of this specification are also excluded. It is noted that where descriptions, definitions, and/or terms used in the accompanying materials of this specification are inconsistent or contradictory with what is described in this specification, the specifications, definitions, and/or terms used in this specification shall control.

Finally, it is to be understood that the embodiments described herein are merely illustrative of the principles of the embodiments of the present disclosure. Other variations are possible within the scope of this specification. Thus, by way of example and not limitation, alternative configurations of embodiments of the present disclosure may be considered consistent with the teachings of the present disclosure. Accordingly, the embodiments of the present specification are not limited to the embodiments explicitly described and illustrated herein.

## Claims

1. A fully-sealed brushless motor for dry and wet applications, comprising a motor casing body, a motor rotor, a stator core, a moving impeller, an air guide enclosure, a circuit board, and a circuit board end cover; wherein
the motor casing body comprises an upper aluminum casing body and a lower aluminum casing body connected together in a sealed manner; the motor rotor is arranged in a space enclosed by the upper aluminum casing body and the lower aluminum casing body, and the motor rotor transmits heat to the upper aluminum casing body and/or the lower aluminum casing body by means of the stator core to undergo heat dissipation;
a rotating shaft of the motor rotor sealingly fits with a bearing and extends out from the lower aluminum casing body, the moving impeller is installed at the shaft head of the rotating shaft; the air guide enclosure is installed on the lower aluminum casing body at an outer side of the moving impeller; a gas flow discharged by the moving impeller is blown towards the motor casing body by means of the air guide enclosure, and the heat of the motor casing body is simultaneously taken away;
the circuit board is arranged in a space enclosed by the sealingly connected circuit board end cover and upper aluminum casing body; an outer surface of a power device Metal-Oxide-Semiconductor Field-Effect Transistor (MOS Transistor) on the circuit board conducts heat through heat conductive glue to be in contact with an upper surface of the upper aluminum casing; a lead of the circuit board passes, in a sealed manner, through a lead outlet hole formed in the circuit board end cover and extends outward; the moving impeller rotates and carries away the heat conducted from the motor rotor, stator core, and circuit board to the outer surfaces of the upper aluminum casing body and lower aluminum casing body.

2. The motor of claim 1, wherein the upper aluminum casing body and/or the lower aluminum casing body is made of a metal aluminum alloy; and an outer surface of the upper aluminum casing body and/or the lower aluminum casing body is provided with cooling blades.

3. The motor of claim 1, wherein the lead outlet hole and the lead are sealed with a sealant; the stator core is adhered to an inner surface of the upper aluminum casing body and/or the lower aluminum casing body via the heat conductive glue; and an MCU of the circuit board is directly adhered to the upper surface of the upper aluminum casing body via a heat conductive glue.

4. The motor of claim 1, wherein the maximum dimension of the lead outlet hole is less than or equal to 3 times the diameter of the lead of the circuit board; and the diameter of the lower aluminum casing body gradually increases from its end wall toward the upper aluminum casing body.

5. The motor of claim 1, wherein an end wall of the lower aluminum casing is provided with a through hole; the through hole is provided with the bearing and protective structure; the rotating shaft is sealed by the bearing and the protective structure and extends out from the lower aluminum casing body.

6. The motor of claim 5, wherein the protective structure comprises a seal and a bushing; the seal is installed on an outer side surface of the end wall, and an elastic structure surrounding the rotating shaft is provided on the seal; and
the bushing is sleeved on the rotating shaft; the bushing is provided with an annular protrusion coaxially arranged with the rotating shaft; and the annular protrusion is embedded in the elastic structure.

7. The motor of claim 6, wherein the bushing drives the annular protrusion to rotate with the rotating shaft to cut the elastic structure to form an annular groove; the annular groove covers a portion of the annular protrusion located in the annular groove.

8. The motor of claim 6, wherein an annular mounting groove is formed on the outer side surface of the end wall, the installing groove is arranged coaxially with the rotating shaft, and the seal is clamped in the installing groove; the outer side surface of the end wall is further provided with at least one baffle ring which surrounds the circumferential outer side of the seal and extends in a direction away from the end wall.

9. A protective structure for a motor, the motor comprising a motor body and a motor casing body, the motor body comprising a rotating shaft, one end of the rotating shaft extending out of the motor housing from an end wall of the motor housing, the rotating shaft sealingly fitting with the end wall via the protective structure, wherein the protective structure comprises a seal and a bushing;
the seal is installed on an outer side surface of the end wall, and an elastic structure surrounding the rotating shaft is provided on the seal; and
the bushing is sleeved on the rotating shaft; the bushing is provided with an annular protrusion coaxially arranged with the rotating shaft; and the annular protrusion is embedded in the elastic structure.

10. The protective structure of claim 9, wherein the bushing drives the annular protrusion to rotate with the rotating shaft to cut the elastic structure to form an annular groove; the annular groove covers a portion of the annular protrusion located in the annular groove.

11. The protective structure of claim 9, wherein a radial width of the annular protrusion gradually increases from a direction close to the motor casing body to a direction away from the motor casing body.

12. The motor of claim 9, wherein the bushing is made of metal or plastic, and the seal is made of silicone, teflon, or vinyl.

13. An installation method of a motor, the motor comprising a motor body, a motor casing body, and a protective structure, the motor body comprising a rotating shaft, the protective structure comprising a seal and a bushing, the installation method comprising:
extending one end of the rotating shaft from an end wall of the motor casing body;
providing the seal on the outer side of the end wall, the seal being provided with an elastic structure surrounding the rotating shaft; and
installing the bushing provided with an annular protrusion to the rotating shaft, the annular protrusion being coaxial with the rotating shaft, such that an axial top end of the annular protrusion compresses the elastic structure to be embedded in the elastic structure.

14. The method of claim 13, the installation method further comprising:
rotating the bushing with the rotating shaft, so that the axial top end of the annular protrusion cuts the elastic structure, so that an annular groove covering the annular protrusion is formed on the elastic structure.

15. The method of claim 13, wherein an installing groove is formed on the outer side surface of the end wall, the installing groove surrounding a circumferential outer side of the rotating shaft;
the providing the seal on the outer side of the end wall, the seal being provided with an elastic structure surrounding the rotating shaft comprises:
injecting liquid elastic material into the installing groove, and forming the elastic structure after solidification of the liquid elastic material; or
clamping the elastic structure in the installing groove.
